# EUROPÄISCHE PATENTANMELDUNG

(11) **EP 1 239 641 A1**
(43) Veröffentlichungstag der Anmeldung: **11.09.2002**
(21) Anmeldenummer: 01105790.8
(22) Anmeldetag: 08.03.2001
(51) Int. Cl.: H04L 27/00, H04L 1/00

(54) **Verfahren und Vorrichtung zur blinden Detektion und Festlegung eines Demodulationsverfahrens in einem digitalen Mobilfunksystem**

(71) Anmelder: SIEMENS AKTIENGESELLSCHAFT, 80333 München (DE)
(72) Erfinder: Finn, Lutz, Dr., 81369 München (DE); Kunze, Holger, 81375 München (DE)

(57) **Zusammenfassung**

In einer Empfangsanlage eines digitalen Mobilfunksystems ankommende und gemäß einem senderspezifischen Modulationsverfahren modulierte Einzeldatenpakete werden jeweils gemäß einem nach Empfangsgütequalitätskriterien einzeldatenpaketspezifisch gewählten Demodulationsverfahren demoduliert und anschließend zu einem Gesamtdatenpaket zusammengefügt. Dem Gesamtdatenpaket wird ein von der Gesamtgüte aller empfangenen Einzeldatenpakete abhängiges gesamtdatenpaketempfängerspezifisches Demodulationsverfahren zugeordnet. Einzeldatenpakete, die nach einem hiervon abweichenden einzeldatenpaketspezifischen Demodulationsverfahren demoduliert wurden, werden verworfen.

## Beschreibung

Die vorliegende Erfindung bezieht sich auf ein Verfahren zum Betreiben eines digitalen Mobilfunknetzes, und insbesondere auf ein Verfahren zum Betreiben eines digitalen Mobilfunknetzes, bei dem empfängerseitig Demodulationsverfahren ohne vorhergehende Kenntnis der senderseitig gewählten Modulationsart für modulierte digitale Datensignale ausgewählt werden. Weiterhin betrifft die vorliegende Erfindung Vorrichtungen zur Durchführung des erfindungsgemäßen Verfahrens. Die vorliegende Erfindung ist insbesondere für ein nach dem GSM Standard betriebenes digitales Mobilfunksystem bestimmt, bei dem empfängerseitig nicht vorab bekannt ist, nach welchem senderseitig gewählten Modulationsverfahren eintreffende digitale Signale moduliert worden sind.

Ein solches Verfahren, bei dem empfängerseitig die Art der Modulation der eintreffenden senderseitig modulierten Signale nicht vorab bekannt ist, wird in der Fachsprache auch als "Blind Detection" bezeichnet, da der Empfänger "blind", also in Unkenntnis der Modulationsart der eintreffenden Signale, diese demodulieren muss.

In digitalen Mobilfunksystemen, insbesondere solchen nach dem GSM Standard, werden digitale Daten in Form von Einzelbits in in komplexstrukturierten Gesamtdatenpaketen vorspezifizierter Zeitdauer und Bitzahl zusammengefasst.

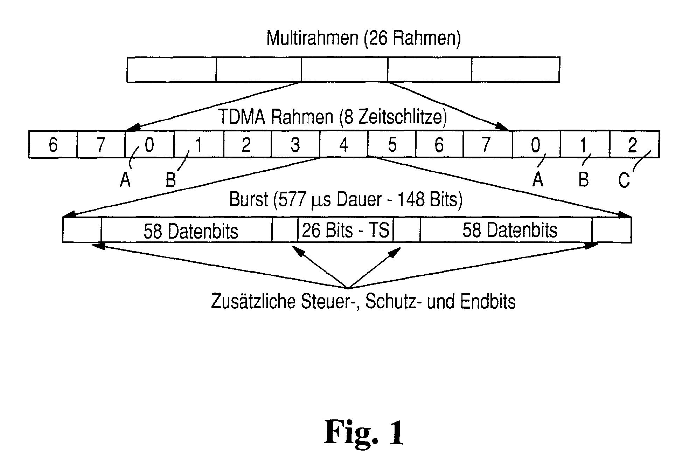

Fig. 1 zeigt beispielhaft den Aufbau solcher komplex struktruierter Datenpakete, wie sie z.B. in der GSM-Norm 05.02 V 8.0.1 (1999-07) näher spezifiziert sind. Dabei werden z.B. im GSM Standard zunächst 148 Bits zu einem Einzeldatenpaket in Form eines sogenannten "Normalburst" zusammengefasst. Dem GSM Standard liegt ein Zeitmultiplex-Verfahren (TDMA - time division multiplex access) bei der Übertragung von Datenpaketen zugrunde, welches vorsieht, dass Datenpakete in spezifizierten Zeitschlitzen ausgesendet werden. Das kleinste zusammenhängend in einem Zeitschlitz von 577 µs ausgesandte Einzeldatenpaket wird dabei in der GSM Spezifikation als "Burst" bezeichnet. Mehrere Bursts können gemeinsam in überlagerten Strukturen (z.B. in Fig. 1 in einem in acht Zeitschlitzen ausgesendeten "TDMA-Rahmen" oder in einem "Multirahmen") zusammengefasst werden.

Insbesondere in GSM Systemen wurde bisher nur das bekannte GMSK Modulationsverfahren zur Kodierung einzelner zu übertragender Einzeldatenpakete ("Bursts") angewendet.

In Zukunft sollen jedoch bei digitalen Mobilfunksystemen, insbesondere auch solchen nach dem GSM Standard, mindestens zwei unterschiedliche Modulationsverfahren auf der Luftschnittstelle, also der freien Funkübertragungsstrecke, zwischen einem Sender und einem Empänger eingesetzt werden. Dies sind z.B. GMSK-Modulation und 8-PSK-Modulation für die Signalkodierung. Einzelheiten zu diesen beiden Modulationsverfahren finden sich z.B. in der GSM-Norm 05.04 V 8.1.0 (1999-12).

Bei einem GMSK-Verfahren können Folgen einzelner Bits *b*_{*i*} ∈{0,1} in einer komplexen Bildebene z.B. auf je zwei relativ weit voneinander beabstandete Bildpunkte (Symbolvektoren) auf den Einheitskreis abgebildet werden. Beim 8-PSK Verfahren werden hingegen Folgen einzelner Bits *b*_{*i*} ∈ {0,1} in einer komplexen Bildebene auf acht letztlich näher beieinander liegende Bildpunkte auf dem Einheitskreis abgebildet. Dadurch können mit einem solchen 8-PSK Modulationsverfahren wesentlich höhere Datenraten übertragen werden als mit einem GMSK-Modulationsverfahren. Dies ist insbesondere bei Anwendungen nützlich, wo sehr hohe Datenübertragungsraten benötigt werden, wie z.B. dann, wenn von einer Mobilstation in einem digitalen Mobilfunknetz eine Datenverbindung mit dem Internet aufgebaut werden soll. Wegen des geringeren Abstands der Bildpunkte in der komplexen Ebene zueinander bei 8-PSK ist dieses Modulationsverfahren aber empfindlicher gegenüber Störungen auf der Luftschnittstelle zwischen Mobilstation und Basisstation. Bei 8-PSK können schon geringfügigere atmosphärische Störungen auf dem Übertragungsweg zu einem "Abdriften" eines Bildpunktes auf einen benachbarten Bildpunkt in der komplexen Ebene führen, was empfängerseitig zu Fehlinterpretationen der zu übertragenden Bitfolge führt. Deshalb ist es wünschenswert, in einem digitalen Mobilfunknetz zu einem Verbindungsaufbau gleichzeitig zumindest zwei Modulationsverfahren zur Verfügung zu haben. Je nach atmosphärischen Übertragungsbedingungen kann dann zwischen störunempfindlicheren Modulationsverfahren mit geringerer Datenübertragungsrate (z.B. GMSK) und störempfindlicheren Modulationsverfahren mit höherer Datenübertragungsrate (z.B. 8-PSK) umgeschaltet werden. Hat eine Mobilstation z.B. bei günstigen Übertragungsbedingungen unter Verwendung eines 8-PSK Modulationsverfahrens Verbindung zum Internet aufgenommen, so kann bei Verschlechterung der Übertragungsbedigungen unter Umschaltung auf das langsamere GMSK Modulationsverfahren die Verbindung aufrecht erhalten werden.

Um in Zukunft digitale Mobilfunksysteme mit mehr als nur einem Übertragungsverfahren betreiben zu können, und um insbesondere GSM Systeme mit GMSK-Modulation oder 8-PSK-Modulation betreiben zu können, ist es notwenig, einen Empfänger in einem digitalen Mobilfunknetz in die Lage zu versetzen, digitale Daten, von denen der Empfänger noch nicht weiß, nach welchem Kodierungs- und Modulationsverfahren sie senderseitig kodiert und moduliert worden sind, zu empfangen und empfängerseitig korrekt zu demodulieren und dekodieren.

Aufgabe der vorliegenden Erfindung ist es, entsprechende Verfahren und Vorrichtungen zur Verfügung zu stellen.

Diese Aufgabe wird durch die unabhängigen Ansprüche gelöst. Die abhängigen Ansprüche betreffen bevorzugte Ausführungsformen der vorliegenden Erfindung.

Erfindungsgemäß werden senderseitig nach einem einheitlichen Modulationsverfahren modulierte Einzeldatenpakete (z.B. die "Bursts" in einem GSM Mobilfunksystem), die bei einem Empfänger in einem digitalen Mobilfunksystem ankommen, unabhängig voneinander entsprechend einem jeweils einzeldatenpaketspezifisch wahrscheinlicheren Demodulationsverfahren entzerrt und demoduliert. Die Festlegung eines einzeldatenpaketspezifisch wahrscheinlicheren Demodulationsverfahrens geschieht aufgrund von Qualitätsparametern, die aus dem aktuell empfangenen Einzeldatenpaket ermittelt werden. Die für diese Festlegung relaventen Qualitätskriterien werden zusammen mit den Einzeldatenpaketdaten zu einem Deinterleaver ("Entwürfeler")weitergereicht. Erst nachdem mehrere zu übertragende Einzeldatenpakete im Deinterleaver vorliegen, wird dort z.B. aufgrund eines Algorithmusses, der die Gesamtheit aller einzeldatenpaketspezifischen Qualitätskriterien auswertet, eine Entscheidung darüber getroffen, welche senderseitige Modulationsart im vorliegenden Falle bei den eingetroffenen Einzeldatenpaketen mit höchster Wahrscheinlichkeit vorgelegen haben dürfte. Dem Gesamtdatenpaket im Empfänger wird dann diese Modulationsart als gesamtdatenpaketempfängerspezifische Demodulationsart, d.h. als "eigentlich richtige" Demodulationsart für das Gesamtdatenpaket zugewiesen. Diese gesamtdatenpaketempfängerspezifische Demodulationsart ist also die Demodulationsart, die der senderspezifischen Modulationsart aufgrund der Gesamtheit der Qualitätskriterien der eingegangenen Einzeldatenpakete mit größter Wahrscheinlichkeit entspricht. Sollten senderseitig im Deinterleaver dabei Einzeldatenpakete vorliegen, die vorab nach ihrem Eintreffen beim Empfänger aufgrund ihrer einzeldatenpaketspezifischen Qualitätskriterien mit einzeldatenpaketspezifischen Demodulationsverfahren demoduliert worden sind, welche nicht dem später zugewiesenen gesamtdatenpaketempfängerspezifischen Demodulationsverfahren entsprechen, so werden die Daten in solchen "falsch" demodulierten Einzeldatenpaketen durch Datensymbole ersetzt, die den weiteren Dekodiervorgang in einem Dekodierer nicht beeinflussen. Dadurch reduziert sich lediglich die Redundanz des dekodierten Gesamtdatenpakets. Bei ausreichender Qualität der übrigen, richtig entzerrten Einzeldatenpakete ist dann eine fehlerfreie Dekodierung des Gesamtdatenpakets möglich.

Die Merkmale der vorliegenden Erfindung ergeben sich auch aus den nachfolgenden Ausführungsbeispielen in Verbindung mit den Zeichnungen.

Es zeigen:
Fig. 1 die Anordnung von mehreren Einzeldatenpaketen ("Bursts" in der GSM Terminologie) welche in einem nach dem GSM Standard betriebenen digitalen Mobilfunknetz verwendet werden;
Fig. 2 eine Vorrichtung zur Durchführung eines erfindungsgemäßen Verfahrens;
Fig. 3 ein Ablaufschema für ein erfindungsgemäßes Verfahren.

In der Fig. 1 ist ein Zeit-Multiplexschema (TDMA = time dividion multiplex access) für die Datenübertragung zwischen einer Mobilstation und einer Basisstation in einem nach der GSM Norm betriebenen Mobilfunksystem gezeigt. In einem sogenannten TDMA Rahmen stehen dabei acht Zeitschlitze für unterschiedliche Teilnehmer zur Verfügung. Ein Teilnehmer A bekommt z.B. jeweils den ersten Zeitschlitz ("0") zugewiesen, d.h. er kann im Zeitschlitz "0" ein erstes Einzeldatenpaket an eine Basisstation senden. Ein Teilnehmer B bekommt den zweiten Zeitschlitz ("1") zugeordnet, usw. bis alle acht Zeitschlitze 0 bis 7 vergeben sind. Die Anordnung dieser Zeitschlitze 0 bis 7 wiederholt sich dabei zyklisch. Nach Ablauf des mit ("7") gekennzeichneten achten Zeitschlitzes ist also wieder der Teilnehmer A am Zuge, und kann nun ein zweites Einzeldatenpakt ("Burst") an eine Basisstation senden.

Dabei entsprechen die Einzeldatenpakete Folgen von aus Bits *b*_{*i*} ∈{0,1} durch Kodierung und Modulation erzeugten digitalen Signalen.

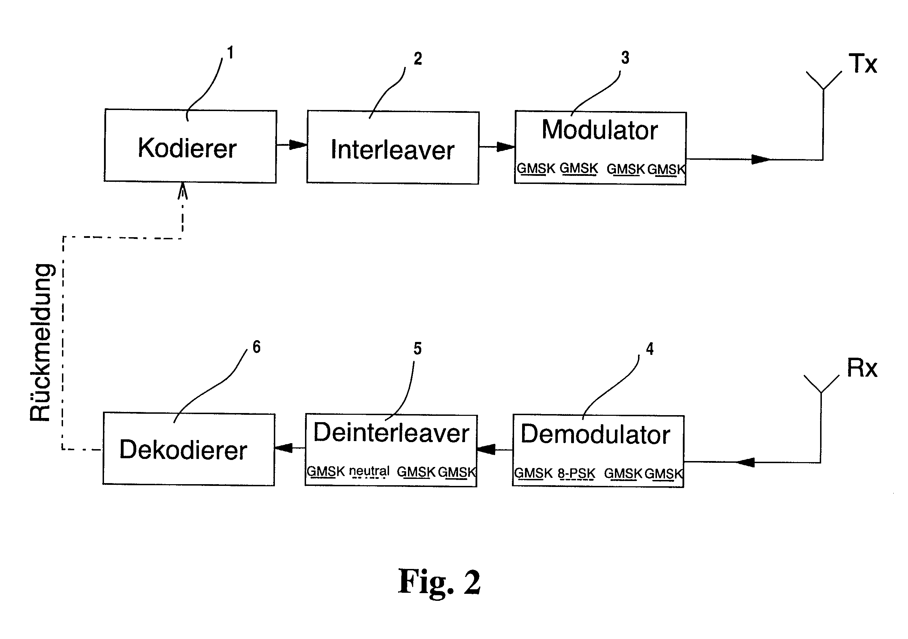

Die in Fig. 2 gezeigte Vorrichtung zur Durchführung eines erfindungsgemäßen Verfahrens umfasst eine Sendeanlage und eine Empfangsanlage.

In der Sendeanlage einer Basisstation oder Mobilstation in einem digitalen Mobilfunknetz werden von einem Kodierer 1 stammende kodierte und mit Redundanz aufgefüllte Daten über einen Interleaver ("Verwürfeler") zu einem Modulator 3 geleitet und dort wahlweise z.B. gemäß einem GMSK- oder einem 8-PSK-Verfahren moduliert. Das dabei gewählte Modulationsverfahren wird als senderspezifisches Modulationsverfahren bezeichnet. In dem in Fig. 2 gezeigten Modulator 3 liegen beispielhaft vier durch durchgezogene Striche sysmbolisierte Einzelburts an, die alle einheitlich mit einem GMSK-Modulationsverfahren moduliert worden sind.

Die Auswahl, welches Modulationsverfahren senderseitig anzuwenden ist, wird nach Kriterien getroffen, die vorab festgelegt sind. Wichtig dabei ist, das für eine größere Gruppe von Einzeldatenpaketen (z.B. vier, wie in Fig. 2 im Block "3 Modulator" schematisch angedeutet), jeweils ein einheitliches senderseitiges Modulationsverfahren angewandt wird. Erst wenn eine größere Anzahl von Einzeldatenpaketen versendet worden ist, wird dieses einheitliche Modulationsverfahren eventuell geändert. Dies kann z.B. dadurch geschehen, dass eine Rückmeldung über die Qualität der empfängerseitig dekodierten Daten von einem sich in einer im folgenden noch eingehender beschriebenen Empfangsanlage befindlichen Dekodierer 6 zurück auf den Kodierer 1 in der Sendeanlage stattfindet, wie durch die gestrichelte Linie in Fig. 2 symbolisiert ist. Geschieht eine solche Rückmeldung, so wird im Modulator 3 in Fig. 2 z.B. von GMSK auf 8-PSK umgeschaltet, falls anhand der Qualitätsrückmeldung senderseitig festgestellt wird, dass auch mit 8-PSK anstelle von GMSK gesendet werden könnte.

Die kodierten und gemäß einem einheitlichen Modulationsverfahren im Modulator 2 modulierten Einzeldatenpakete werden in passenden Sendezeitschlitzen über eine Sendeantenne Tx zu einer Empfangsantenne Rx über eine Luftschnittstelle (Funkübertragungsstrecke) geleitet.

Von der Empfangsantenne Rx gelangen die Einzeldatenpakete in einen Einzeldatenpaketentzerrer/Demodulator 4, wo übertragungswegbedingte Signalverzerrungen kompensiert ("entzerrt") werden. Der Demodulator 4 entscheidet sich bei jedem neu eintreffenden Einzeldatenpaket anhand von vorab bestimmten Qualitätskriterien für ein für den aktuell eingetroffenen Einzeldatenpaket individuell auszuwählendes einzeldatenpaketempfängerspezifisches Demodulationsverfahren, mit dem dann das aktuell eingetroffene Einzeldatenpaket demoduliert wird. Ein solches Qualitätskriterium kann z.B. das Signal-Rauschverhältnis sein, mit dem das Einzeldatenpaket eingetroffen ist.

Bei den in Fig. 2 beim Demodulator 4 eingetroffenen vier Einzeldatenpaketen hat sich der Demodulator beispielsweise dafür entschieden, dass erste, dritte und vierte Einzeldatenpaket nach GMSK zu demodulieren. Beim zweiten Einzeldatenpaket hat sich der Demodulator aber dafür entschieden, nach 8-PSK zu demodulieren.

Die nacheinander auf diese Weise, also möglicherweise individuell unterschiedlich demodulierten (vier) Einzeldatenpakete, werden sodann vom Demodulator 4 auf einen Deinterleaver 5 ("Entwürfeler") weitergegeben und zwar mitsamt den die jeweilige Einzelentscheidung bei der Einzeldatenpaketdemodulierung repräsentierenden Qualitätskriterien. Der Deinterleaver 5 sammelt zunächst alle (in Fig. 2: vier) entzerrten Einzeldatenpakete mitsamt den sie jeweils repräsentierenden Qualitätskriterien der Reihe nach auf und fügt die nach einzeldatenpaketempfängerspezifischen Demodulationsverfahren demodulierten Einzeldatenpakete zu einem Gesamtdatenpaket zusammen.

Erst nach Vorliegen einer bestimmten Anzahl von Einzeldatenpaketen wird im Deinterleaver 6 anhand der Gesamtbewertung der Qualitätskriterien der Einzeldatenpakete eine Entscheidung darüber getroffen, welches (einheitliche) Modulationsverfahren senderseitig zur Modulation der Einzeldatenpakete mit höchster Wahrscheinlichkeit angewendet worden war. Mit anderen Worten: aufgrund der Gesamtheit der Qualitätskriterien aller empfängerseitig individuell entzerrten und demodulierten Einzeldatenpakete wird letztlich empfängerseitig ein gesamtdatenpaketempfängerspezifisches Demodulationsverfahren ausgewählt, welches dem senderseitigen Modulationsverfahren mit größtmöglicher Wahrscheinlichkeit entsprechen sollte.

Mögliche Entscheidungskriterien für die Auswahl des gesamtdatenpaketempfängerspezifischen Demodulationsverfahrens können sein:
Majorität (d.h. im vorliegenden Beispiel mit vier Einzeldatenpaketen, dass zumindest drei der Einzeldatenpakete nach ein und demselben einzeldatenpaketempfängerspezifischen Demodulationsverfahren demoduliert worden sind), normiertes Signal-Rauschverhältnis, Signalleistung oder andere.

Empfängerseitig werden also Einzeldatenpakete unabhängig voneinander entsprechend einem individuell wahrscheinlicheren einzeldatenpaketempfängerspezifischen Demodulationsverfahren entzerrt und demoduliert, und die für die jeweilige Auswahl eines einzeldatenpaketempfängerspezifischen Demodulationsverfahrens relevanten Qualitätskriterien werden zusammen mit den Einzeldatenpaketdaten zum Deinterleaver 5 weitergereicht. Erst nach Vorhandensein mehrerer Einzeldatenpakete entscheidet der Deinterleaver 6 über ein für mehrere Einzeldatenpakete als Gesamtheit als "richtig", wählendes gesamtdatenpaketempfängerspezifisches Demodulationsverfahren, welches mit größter Wahrscheinlichkeit mit dem senderseitig gewählten Modulationsverfahren übereinstimmt.

In dem in Fig. 2 gezeigten Beispiel entscheidet der Deinterleaver 5 nach dem "Majoritätskriterium" also, dass GMSK mit höchster Wahrscheinlichkeit als senderseitiges Modulationsverfahren verwendet worden ist.

Daten in den nicht gemäß dem so festgelegten gesamtpaketempfängerspezifischen Demodulationsverfahren entzerrten und demodulierten Einzeldatenpaketen werden dabei durch "neutrale" Datensymbole ersetzt, die den weiteren Dekodiervorgang in einem Dekodierer 6 nicht beeinflussen. In Fig. 2 heißt das, dass im Deinterleaver 5 das zweite, im Demodulator 4 fälschlicherweise gemäß 8-PSK demodulierte Einzeldatenpaket verworfen wird, und durch neutrale Datensymbole ersetzt wird. Durch diese Vorgehensweise reduziert sich lediglich die Redundanz des kanalkodierten Datenpakets. Bei ausreichender Qualität der in zutreffender Weise demodulierten Einzeldatenpaketdaten ist dann eine fehlerfreie Dekodierung des gesamten Datenpakets trotzdem noch möglich.

Das erfindungsgemäße Verfahren hat zwei wesentliche Vorteile. Zum einen ergeben sich empfängerseitig bei der Verarbeitung eintreffender Einzeldatenpakete keine zusätzlichen Verzögerungszeiten, da jedes Einzeldatenpaket nach Auswahl des für ihn wahrscheinlicheren einzeldatenpaketempfängerspezifischen Demodulationsverfahrens nur einmal entzerrt und demoduliert wird. Desweiteren entscheidet der Deinterleaver 5 erst nach Vorlage aller Einzeldatenpakete endgültig über das gesamtdatenpaketempfängerspezifische Demodulationsverfahren für ein mehrere Einzeldatenpakete umfassendes Gesamtdatenpaket.

Die Auswahl eines gesamtdatenpaketempfängerspezifischen Demodulationsverfahrens wird also vom einzeldatenpaketweise operierenden Demodulator/Entzerrer 4 zum gesamtdatenpaketweise operierenden Deinterleaver 5 verlagert, der das für das Gesamtdatenpaket plausibelste Demodulationsverfahren auswählen kann.

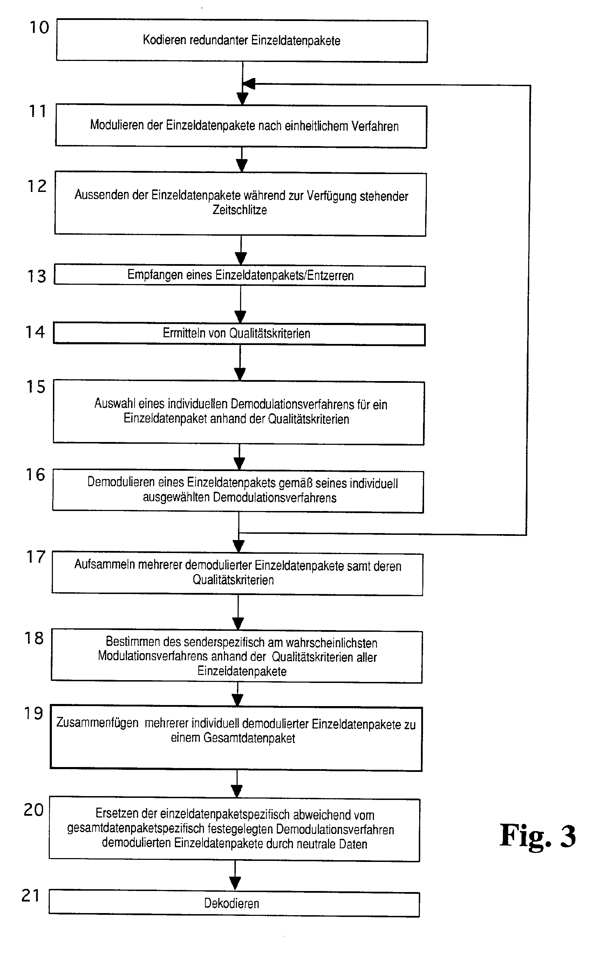

Fig. 3 veranschaulicht den Ablauf eines erfindungsgemäßen Verfahrens nochmals anhand eines Ablaufdiagramms, welches aus einzelnen Funktionsblöcken besteht.

Im Funktionsblock 10 werden Bitfolgen in digitale und Redundanz enthaltene Signalfolgen kodiert (dies geschieht in Fig. 2 im Kodierer 1) und anschließend in Einzeldatenpakete aufgespaltet (dies geschieht in Fig. 2 im Interleaver 2).

Im Funktionsblock 11 werden die Einzeldatenpakete nach einem festzulegenden senderspezifischen Modulationsverfahren, also z.B. GMSK oder 8-PSK, moduliert (dies geschieht in Fig. 2 im Modulator 3), wobei dieses Modulationsverfahren für mehrere aufeinanderfolgende Einzeldatenpakete einheitlich ist.

Im Funktionsblock 12 wird ein so moduliertes Einzeldatenpaket in einem zugeordneten Zeitschlitz von einer Sendeanlage zu einer Empfangsanlage übertragen (dies geschieht in Fig. 2 auf der Funkübertragungsstrecke von der Sendeantenne Tx zur Empfangsantenne Rx).

Im Funktionsblock 13 wird ein ausgestrahltes und von einer Empfangseinheit empfangenes Einzeldatenpaket in einem Einzeldatenpaketentzerrer entzerrt, d.h übertragungswegbedingte Verzerrungen der digitalen Signale werden gemäß vordefinierter Korrekturalgorithmen kompensiert, um Empfangssignale zu reproduzieren, die mit größtmöglicher Wahrscheinlichkeit den Sendesignalen entsprechen (dies geschieht in Fig. 2 in einem Entzerrerfunktionsblock im Demodulator 4).

Die Qualität des entzerrten Einzeldatenpakets wird anhand von Signalqualitätsdaten wie z.B. einem Signal-Rauschverhältnis im Funktionsblock 14 bewertet (dies geschieht in Fig. 2 ebenfalls im Demodulator 4).

Anhand der ermittelten Qualitätskriterien wird im Funktionsblock 15 ein bestimmtes einzeldatenpaketempfängerspezifisches Demodulationsverfahren (z.B. GMSK) aus einer Gruppe von empfängerseitig potentiell zur Verfügung stehenden Demodulationsverfahren festlegt, welches dabei nicht notwendigerweise dem senderseitig gewählten, für mehrere Einzeldatenpakete einheitlichen Modulationsverfahren entspricht (dies geschieht in Fig. 2 ebenfalls im Demodulator 4).

Im Funktionsblock 16 wird das entzerrte Einzeldatenpaketsignal anhand des im Funktionsblock 15 festgelegten Demodulationsverfahrens demoduliert (dies geschieht in Fig. 2 ebenfalls im Demodulator 4).

Das so demodulierte Einzeldatenpaket wird zur weiteren Verarbeitung an den Funktionsblock 17 mitsamt Angaben zu dem ihm individuell zugeordneten einzeldatenpaketempfängerspezifischen Demodulationsverfahren und den ihn individuell charakterisierenden Qualitätskriterien weitergereicht (dies geschieht in Fig. 2 im Deinterleaver 5).

Gleichzeitig verzweigt das Ablaufschema zurück zum Funktionsblock 12. Weitere Einzeldatenpakete werden gemäß dem Ablauf nach den Funktionsblöcken 11 bis 16 bearbeitet, bis mehrere senderseitig nach einem einheitlichen Verfahren modulierte Einzeldatenpakete von der Sendeeinheit zur Empfangseinheit übertragen worden sind, dort entzerrt worden sind, ihre jeweils individuellen Qualitätskritrien ermittelt worden sind, das jeweilige Einzeldatenpaket nach einem von Einzeldatenpaket zu Einzeldatenpaket möglicherweise verschiedenen und jeweils individuell anhand seiner individuellen Qualitätskriterien festgelegten einzeldatenpaketempfängerspezifischen Demodulationsverfahren demoduliert worden ist und mitsamt seinen individuellen Qualitätskriterien an den Funktionsblock 17 weitergereicht worden ist.

Im Funktionsblock 17 werden die demodulierten Einzeldatenpakete der Reihe nach mitsamt ihren Qualitätskriterien aufgesammelt (dies geschieht in Fig. 2 im Deinterleaver 5).

Im Funktionsblock 18 werden die zu den Einzeldatenpaketen individuell ermittelten Qualitätskriterien nochmals in ihrer Gesamtheit bewertet und in Abhängigkeit von diesem Gesamtergebnis eine Entscheidung getroffen über ein mehreren Einzeldatenpaketen in ihrer Gesamtheit mit größter Plausibilität zuzuordnende gesamtdatenpaketempfängerspezifischen Demodulationsverfahren, welches mit höchster Wahrscheinlichkeit dem senderspezifischen Modulationsverfahren entspricht.

Im Funktionsblock 19 werden die aufgesammelten demodulierten Einzeldatenpakete zu einem Gesamtdatenpaket zusammengefügt (dies geschieht in Fig. 2 ebenfalls im Deinterleaver 5).

Einzeldatenpakete, für die im Funktionsblock 15 ein individuelles einzeldatenpaketempfängerspezifisches Demodulationsverfahren angewandt worden ist, welches nicht dem im Funktionsblock 19 für das Gesamtpaket gewählten gesamtdatenpaketempfängerspezifischen Demodulationsverfahren entspricht, werden im Funktionsblock 20 durch "neutrale" Symbole ersetzt (dies geschieht in Fig. 2 ebenfalls im Deinterleaver 5).

Mit anderen Worten: ein im Funktionsblock 16 mit einem einzeldatenpaketempfängerspezifischen Demodulationsverfahren demodulierter Einzeldatenpaket, dessen einzeldatenpaketempfängerspezifisches Demodulationsverfahren von dem für das Gesamtpaket im Funktionsblock 19 gewählten gesamtdatenpaketempfängerspezifischen Demodulationsverfahren abweicht, wird in dem Sinne verworfen, dass es durch Symbole ersetzt wird, die das Ergebnis der weiteren Dekodierung (in Fig. 2 geschieht die Dekodierung im Dekodierer 6) der übrigen Einzeldatenpakete im Gesamtdatenpaket nicht beeinflussen.

Im Funktionsblock 21 findet die endgültige Dekodierung der in einem solchen Gesamtdatenpaket vorliegenden Daten statt.

Der Verlust der in einem bestimmten Gesamtdatenpaket verworfenen Einzeldatenpakete kann dabei dadurch kompensiert werden, dass in anderen Gesamtdatenpaketen redundante Informationen erhalten sind, die den Informationsverlust kompensieren.

## Patentansprüche

1. Verfahren zum Betreiben eines digitalen Mobilfunknetzes, insbesondere eines nach dem GSM Standard operierenden digitalen Mobilfunknetzes, welches folgende Schritte umfasst:
a) kodierte Einzeldatenpakete werden senderseitig jeweils nach einem einheitlichen, aus einer Gruppe von mehreren möglichen senderseitigem Modulationsverfahren zu wählenden senderspezifischen Modulationsverfahren moduliert;
b) die modulierten Einzeldatenpakete werden von einem Sender zu einem Empfänger übertragen;
c) für jedes vom Empfänger empfangene Einzeldatenpaket wird ein individuelles einzeldatenpaketempfängerspezifisches Demodulationsverfahren aus einer Gruppe von mehreren empfängerseitig zur Verfügung stehenden Demodulationsverfahren anhand von vom Empfänger aus dem eingehenden Einzeldatenpaket ermittelten Qualitätskriterien ausgewählt, wobei jedes einzelne einzeldatenpaketempfängerspezifische Demodulationsverfahren aus der Gruppe von mehreren empfängerseitig zur Verfügung stehenden Demodulationsverfahren jeweils genau einem der senderseitigen Modulationsverfahren entspricht, wobei aber das für ein bestimmtes Einzeldatenpaket anhand der Auswertung seiner einzeldatenpaketempfängerspezifischen Empfangsqualitätskriterien festgelegte einzeldatenpaketempfängerspezifische Demodulationsverfahren nicht notwendigerweise dem in Schritt a) angewandten senderspezifischen Modulationsverfahren entspricht;
d) mehrere einzelne nach Schritt c) demodulierten Einzeldatenpakete werden in ihrer Gesamtheit zu einem empfängerseitigen Gesamtdatenpaket zusammengefügt;
e) ein aufgrund der Gesamtheit der einzeldatenpaketspezifischen Qualitätskriterien als am wahrscheinlichsten dem in Schritt a) angewandten senderspezifischen Modulationsverfahren entsprechendes gesamtdatenpaketempfängerspezifische Demodulationsverfahren wird festgelegt;
f) in dem empfängerseitigen Gesamtdatenpaket werden Einzeldatenpakete, deren nach Schritt c) ausgewähltes einzeldatenpaketempfängerspezifisches Demodulationsverfahren nicht dem in Schritt e) festgelegten gesamtdatenpaketempfängerspezifischen Demodulationsverfahren entspricht, im empfängerseitigen Gesamtdatenpaket durch Informationen ersetzt, die sich nicht auf eine weitere Dekodierung der in den übrigen Einzeldatenpaketen des empfängerseitigen Gesamtdatenpakets enthaltenen Informationen auswirken.

2. Verfahren nach Anspruch 1,
**dadurch gekennzeichnet,**
**dass** senderseitig genau zwei mögliche Modulationsverfahren und empfängerseitig genau zwei entsprechende Demodulationsverfahren bereitgestellt werden.

3. Verfahren nach Anspruch 2,
**dadurch gekennzeichnet,**
**dass** sender- und empfängerseitig jeweils GMSK und 8-PSK als Modulations- bzw. Demodulationsverfahren bereitgestellt werden.

4. Verfahren nach einem der Ansprüche 1 bis 3,
**dadurch gekennzeichnet,**
**dass** nach der Dekodierung in Schritt f) eine Rückmeldung von der Empfängerseite zur Senderseite über die Qualität der empfängerseitig dekodierten Daten erfolgt, und dass senderseitig in Abhängigkeit von dieser Qualitätsrückmeldung das senderseitige Modulationsverfahen überprüft und gegebenenfalls geändert wird.

5. Digitales Mobilfunksystem, bestehend aus einer Sendeanlage und einer Empfangsanlage,
wobei die Sendeanlage umfasst:
Kodiermittel (1) zum Kodieren digitaler mit Redundanz versehener Daten; einen Interleaver (Verwürfeler 2) zum Bereitstellen von kodierten Einzeldatenpaketen aus den von den Kodiermitteln kodierten Daten;
Modulationsmittel (3) zum Modulieren der kodierten Einzeldatenpakete gemäß einem einheitlichen senderspezifischen Modulationsverfahren, welches aus einer Gruppe von mehreren möglichen senderseitigem Modulationsverfahren gewählt ist;
Sendemittel (Tx) zum Aussenden der modulierten und kodierten Einzeldatenpakete;
wobei die Empfangsanlage umfaßt:
Empfangsmittel (Rx) zum Empfangen von von den Sendemitteln (Rx) ausgesandten Einzeldatenpaketen;
einen Demodulator (4), zum Entzerren und Demodulieren der empfangenen Einzeldatenpaketen gemäß einem anhand von Qualitätskriterien für den Einzeldatenpaketempfang aus einer Gruppe von mehreren empfängerseitig zu Verfügung stehenden Demodulationsverfahren ausgewähltem einzeldatenpaketempfängerspezifischen Demodulationsverfahren;
einen Deinterleaver (Entwürfeler 5) zum Zusammenfügen mehrerer demodulierter Einzeldatenpakete zu einem Gesamtdatenpaket unter Einfügen dekodierneutraler Daten anstelle von Einzeldatenpaketen, die gemäß einem einzeldatenpaketempfängerspezifischen Demodulationsverfahren im Demodulator (4) demoduliert wurden, welches nicht einem anhand von Qualitätskriterien für die Gesamtheit der Einzeldatenpakete ausgewählten gesamtdatenpaketempfängerspezifischen Demodulationsverfahren entspricht, welches mit höchster Wahrscheinlichkeit dem senderseitigen Modulationsverfahren entspricht;
einen Dekodierer (6) zum Dekodieren der vom Deinterleaver (5) bereitgestellten Gesamtdatenpakete.

6. Digitales Mobilfunksystem nach Anspruch 5,
**dadurch gekennzeichnet,**
**dass** die Modulationsmittel (3) einen GMSK- und 8-PSK Modulator enthalten, und der Demodulator (4) entsprechend einen GMSK- und 8-PSK-Demodulator.

7. Digitales Mobilfunksystem nach Anspruch 5 oder 6,
**dadurch gekennzeichnet,**
**dass** Mittel vorgesehen sind, um vom Dekodierer (6) eine Rückmeldung über die Qualität der empfängerseitig dekodierten Daten auf den Modulator (3) in der Sendeanlage zu geben.

8. Sendeanlage für ein digitales Mobilfunksystem nach einem der Ansprüche 5 bis 7, bestehend aus Kodierer (1), Interleaver (2), Modulator (3) und Sendemitteln (Tx).

9. Empfangsanlage für ein digitales Mobilfunksystem nach einem der Ansprüche 5 bis 7, bestehend aus Empfangsmitteln (Rx), Demodulierer (4), Deinterleaver (5) und Dekodierer (6).
